# EUROPEAN PATENT SPECIFICATION

(11) **EP 3 781 489 B1**
(45) Date of publication and mention of the grant of the patent: **14.09.2022**
(21) Application number: 19726153.0
(22) Date of filing: 19.04.2019
(51) Int. Cl.: B65D 21/02, B65D 81/34

(54) **PACKAGE FOR FOOD PRODUCTS AND USES THEREOF**
VERPACKUNG FÜR NAHRUNGSMITTEL UND DEREN VERWENDUNGEN
EMBALLAGE POUR PRODUITS ALIMENTAIRES ET UTILISATIONS DE CET EMBALLAGE

(30) Priority: 20.04.2018 IT 201800004754
(43) Date of publication of application: 24.02.2021
(73) Proprietor: Pastificio Rana S.p.A., 37057 San Giovanni Lupatoto (Verona) (IT)
(72) Inventor: RANA, Gian Luca, 37057 San Giovanni Lupatoto (VR) (IT)
(74) Representative: Mangini, Simone
(86) International application number: PCT/IB2019/053267
(87) International publication number: WO 2019/202565

(56) References cited:
- DE-A1- 4 232 895
- US-A- 4 883 935
- US-A1- 2007 116 806

## Description

### CROSS-REFERENCE TO RELATED APPLICATIONS

This patent application claims priority from Italian application no. 102018000004754 filed on 20/04/2018.

### TECHNICAL FIELD

The present invention relates to a package for food products and uses thereof.

The invention is advantageously intended for the large retail sector, in particular in the category of consumer products and ready-to-eat meals, such as pasta dishes, stuffed pasta, soups, broths, rice etc.

### BACKGROUND OF THE INVENTION

In the food sector, there is a need to create packages that can ensure the preservation of food products for a desired period of time (the so-called "shelf-life") and, at the same time, that can speed up and/or facilitate their preparation for consumption.

In particular, in the "fresh" pasta sector, such as *tortelli, tortellini* or other types of egg pasta, the preservation of organoleptic characteristics is extremely important, both to guarantee a high-quality product and to prevent the development of microbial loads.

With specific reference to the fresh food sector, at the same time there is a need to combine several products, for example a main product and its seasoning, in order to speed up the preparation of the meal for final consumption. In this respect, a very important aspect is to allow the consumer to cook the food products easily and without the risk of getting dirty. In addition, it is desirable that even consumers with little culinary experience are able to prepare and cook food products which are complex if prepared at home.

The patent application with publication number US2009/0214723 describes packages comprising two containers closed by respective lids. This document aims to address the technical problem of allowing the simultaneous heating of several products that normally reach different internal temperature levels, when subjected to the same heat amount, which results in the deterioration of one of the products. According to what is described in US2009/0214723, we intend to overcome this problem by keeping the products inside their respective containers during heating and by placing the containers one on top of the other in a microwave oven, so as to properly position the food products with respect to the incident radiation.

Therefore, US2009/0214723 does not provide for any mixing or joining of the food products before the heating step. Therefore, the package shown in said document is not suitable for the preparation of complex dishes, in which the interaction between food products during cooking determines the final organoleptic characteristics, such as the degree of cooking of pasta or its taste following the addition of a sauce, or the final taste of the dish as a whole.

The document EP2484604 shows a package in which the containers are welded even under a preservation condition and have a single separation septum between them. In use, the septum breaks as a result of the steam that develops when the contents are heated.

The package may be bulky to store. In addition, the septum breakage is pre-set by the manufacturer. This means that the user cannot set the mixing time of the food products and must follow the operating instructions provided by the manufacturer. It may be preferable for the consumer to autonomously manage the food preparation step, for example by speeding up or delaying the mixing of the products. In addition, the consumer cannot taste the product in the containers before preparing the dish.

It should also be noted that the contact between the food products arranged in the two containers only takes place at a certain (relatively high) temperature. This may adversely affect the cooking and/or mixing quality of such food products.

The alternatives proposed in the state of the art do not allow, therefore, to achieve an optimal result both from the organoleptic point of view and from the point of view of the food preservation ("shelf life").

US4883935 discloses a multi-part container for use in a microwave including two sealed compartments for containing complementary foods subjected to different treatment prior to preparation by the consumer. A bottom portion includes a sealed opening defining a first interior region for housing first contents to be subjected to sterilization. An upper part includes a second sealed opening defining a second interior region for housing second contents not benefited from high temperature treatment.

### SUMMARY

The aim of the present invention is to provide a package for food products and uses thereof, which make it possible to overcome, at least partially, the drawbacks of the known art, while at the same time being economical and easy to implement.

In this context, one of the aims of the present invention is to provide a package that can contain different food products, such as pasta and a sauce, ensuring optimal preservation and at the same time allowing a simple and quick preparation for final consumption.

A further aim of the invention is to create a package that allows to heat, and even cook, the products already mixed or otherwise joined together, so that the interaction between the food products can change the organoleptic characteristics of the single products, with positive effects on the final dish, such as on the degree of cooking or taste.

Another aim of the invention is to propose a package that allows the consumer to cook food products without the risk of getting dirty.

A further aim of the invention is to provide a package in which it is directly possible to consume the food after its preparation, in order to allow a take-away consumption, the so-called on-the-go consumption.

The invention also aims to provide a use for preparing a dish starting from the products contained in the package.

According to the present invention a package for food products and uses thereof are provided, as claimed in the following independent claims and, preferably, in any one of the claims directly or indirectly depending on the independent claims.

The embodiments of the present invention achieve the above mentioned aims and other purposes.

In particular, a package for food products is provided, comprising a first and a second container, each of which is provided with an opening for accessing an inner volume adapted to receive (in particular, containing) a respective food product.

Each container is connected to a corresponding closing element, for example a first and a second closing element, designed to close (in particular, in a sealed manner) the access opening of the respective container. Thus, the closing elements are advantageously independent of each other and can be removed individually, so that the end user can access the contents of one or both containers, for example to taste the food products before preparation.

In accordance with one aspect of the invention, the containers are configurable between a preservation condition, in which they are separated and closed by their respective closing elements, and an operating condition, in which the closing elements are (at least partially) disconnected from the respective containers and the latter are coupled at their respective access openings, so as to create a chamber - also called "cooking chamber" - with a containing volume which is defined by the joining of the inner volumes of the single containers. This chamber can be subjected to a heating step and is adapted to receive the food products previously housed, respectively, in the first and second container.

The package allows to preserve the products separately and to heat them when they are already joined together. In this way, the package ensures optimal preservation and shelf-life, also making it possible for food products to interact during their heating or cooking step. Advantageously, therefore, the package allows to modify the organoleptic characteristics of the single products and consequently also of the final dish, such as the degree of cooking and taste. Advantageously, when the package is in the preservation condition, housing the food products in two separate and independent containers also facilitates the storage of the package, since the containers can be moved away from one another and stored in different areas of a pantry, a refrigerator, etc., thus optimizing the storage space available to a user.

In accordance with the claimed invention, the containers are configured to be firmly coupled (when in operating condition) with one another.

In accordance with one aspect of the invention, the first container contains a first food product with at least one liquid component, for example a sauce, a seasoning, a broth and the like, while the second container contains a second food product with at least one solid component, for example pasta, stuffed pasta, rice, meat and the like. In some specific and non-limiting cases, the second food product (e.g. pasta) is raw (i.e. it needs to be completely cooked).

Throughout the present description, the expression "at least one liquid component" means that the first food product may also be semi-liquid and/or may also have other solid or semi-solid components. Similarly, the expression "at least one solid component" means that the second food product may also be semi-solid and/or may also have a liquid or semi-liquid component.

It should be noted that, when the containers are coupled together to create the above-mentioned cooking chamber, the food products initially contained in the respective containers are enclosed in the same containing volume inside the chamber and can thus subjected to a common heating step, whereby at least the liquid component of the first food product causes the (at least partial) cooking of the second food product. In other words, the liquid component of the first food product is adapted to act as a cooking liquid. For example, if the first food product is a sauce and the second food product is pasta, the liquid component of the sauce mixed with the pasta determines its cooking, similarly to what happens when the pasta is in a traditional pot containing cooking water. In an advantageous way compared to the traditional preparation with cooking water, the cooking carried out in the package according to the invention provides the final dish with particular organoleptic characteristics, since the pasta is cooked directly in the sauce.

It should also be noted that, when the first and second containers are in the operating condition (i.e. they are coupled in such a way that the access openings face each other and communicate with each other), the operator (in particular, before cooking the food products) can mix the food products together simply by shaking the package in the operating condition (with the first and second containers coupled to one another) without using other tools (such as a spoon) that would become dirty. This mixing further improves the quality of the cooking.

Throughout the present description, the expression "at least the liquid component of the first food product causes the cooking of the second food product" means that the cooking (or partial cooking) of the second food product may also occur, at least partially, as a result of the liquid component contained in the second food product itself.

Note that when the containers are coupled together and the food products are heated, an (slight) overpressure is created in the inner containing volume (compared to the external environment). This overpressure enables to improve and speed up cooking.

According to some non-limiting embodiments, both containers comprise respective edges arranged around their respective access openings. The edges are shaped to engage with each other in such a way that the access openings of the containers face each other, so that, for example, the first container is coupled in an upside-down position with the second container, or vice versa.

Advantageously but not necessarily, the first and second containers are shaped in such a way that, in the operating condition (i.e. when the containers are coupled together at their respective access openings) the first container is (at least partially) arranged inside the second container. More precisely, when the first and second containers are in the operating condition, the edge of the first container is (at least partially) arranged inside the second container.

According to some non-limiting embodiments, the edge of the first container is counter-shaped with respect to the edge of the second container.

In accordance with some embodiments, an undercut is made at the edge of the second container (or of the first container). Advantageously, the undercut is designed to receive a portion of the edge (more precisely, of a collar) of the first container (or, respectively, of the second container), so that the containers are firmly coupled. In particular, the undercut is made inside the second container (more precisely, on an inner surface of a side wall of the second container).

According to an embodiment, a collar associated with (part of) the edge of the first container is configured to rest against (on) a support surface associated with the edge of the second container. More precisely, the collar protrudes (in particular laterally) outwards from the access opening 101a of the first container 101.

In particular, the support surface extends from (at least) one side wall (more precisely, from the side walls) of the second container, more particularly towards the inside of the container itself. More specifically, the support surface extends from the edge of the second container.

Advantageously but not necessarily, at least one projecting element, such as an indentation, is arranged at the edge of the second (or first) container. The projecting element cooperates with the collar to hold the collar, so that the containers are firmly coupled. In particular, the projecting element is arranged inside the second container (more in particular, on an inner surface of a side wall of the second container; even more in particular, on an inner surface of the edge of the second container).

Advantageously, the firm coupling of the containers at their respective access openings ensures that the pressure that develops inside the cooking chamber as a result of the evaporation of a liquid component of the food products after heating does not cause the separation of the containers, thus causing the outflow of food products. Advantageously, therefore, the package according to the invention allows the consumer to cook the food products without the risk of getting dirty or soiling the surrounding environment, typically the inner space of a microwave oven.

Moreover, the coupling allows to collect the steam condensate produced during the cooking step of the (second) food product in the second container, thus avoiding to dirty the outer walls of the second container. Note also that, since the edge of the first container, which inevitably gets dirty during the seasoning dosing step inside the second container, is housed inside the second container, it only dirties the inside of the second container without dirtying - also in this case - the outer walls of the second container or outside the second container itself.

Note that, in this way, the second container (thanks to the condensation created on its inner surface) is practically cleaned in use.

In particular, each edge delimits the access opening of a respective container, i.e. each edge is close to a margin of the access opening.

In a non-limiting embodiment, the access opening of the first container is shaped to receive a bottom of the second container so that the latter can be housed, at least partially, in the inner volume of the first container, so that a user can pick up the second container through the first container.

Alternatively or in addition, the reciprocal configuration with respect to the one described above is also provided, i.e. the access opening of the second container is shaped to receive a bottom of the first container, so that a user can pick up the first container through the second container. At the end of the heating/cooking step, the containers are separated and the one containing the final dish tends to be much warmer than the other one. The possibility of inserting the bottom of one of the containers into the opening of the other one allows the user to handle the package without the risk of burning himself and, therefore, allows an "on-the-go" consumption of the food directly in the container.

Even more advantageously, a bottom of the first or second container is shaped in such a way as to abut at a predetermined distance from a bottom of the second or first container respectively, so as to define a hollow space between the two containers. Advantageously but not necessarily, the body of the container (e.g. the first container) to which abuts the bottom of the other container (e.g. the second container) is tapered, so as to maintain said distance through a form interference.

Advantageously but not necessarily, one or both containers comprise at least one knurled portion to facilitate the user's grip. Advantageously, the knurled portion allows an appropriate friction and reduces burn risks for the user, when handling the containers after the heating step.

According to some non-limiting embodiments, one or both containers comprise at least one gripping member, in particular a pair of opposing handles.

In some cases, both containers are made of a material suitable for microwave cooking. More precisely, but not necessarily, this material comprises (is) a polymeric material (e.g. selected from PP and/or PET).

In accordance with some non-limiting embodiments, the containers - in their preservation condition - are arranged on top of one another. Advantageously but not necessarily, the package also comprises a band to wrap the containers and reciprocally hold them in position.

According to other embodiments (and in accordance with another aspect of the present invention), a bottom of the first container can be housed in the access opening of the second container, to close it (in a sealed manner) and a closing element is connected to the first container to close its access opening (in a sealed manner). Unlike the configuration described above, there is therefore no second independent closing element connected to the second container. Note that, in these cases, the first container (also) performs the function of the second closing element.

The containers can be configured between a preservation condition, in which the bottom of the first container is housed in the access opening of the second container, and an operating condition in which the closing element is disconnected from the first container and in which the containers are coupled at their respective access openings to create a cooking chamber having a containing volume defined by the joining of the inner volumes of the containers. This chamber can be subjected to a heating step and is adapted to receive the food products previously housed, respectively, in the first and second container.

According to some non-limiting embodiments, the containers are configured to be firmly coupled with one another.

In some cases, the first container is completely housed in the second container and the depth of the first container is lower than the depth of the second container so that, between a bottom of the first container and a bottom of the second container, a containing volume is defined to receive a food product.

In accordance with another aspect of the invention, a bottom of the first container is counter-shaped with respect to the access opening of the second container. More in particular, a bottom of the first container is welded to an edge arranged adjacent to the access opening of the second container.

The invention achieves the indicated aims and addresses further ones, also providing a use of a package as described above; the use comprising the steps of:
- (at least partially) removing the closing elements from their respective containers (i.e. removing the first container from the second container and the first closing element from the first container);
- joining the first food product to the second food product inside the first and/or the second container;
- coupling the containers at the respective access openings to create the chamber having a containing volume defined by the joining of the inner volumes of the containers; said food products remaining enclosed inside said containing volume;
- heating said chamber through a heat source so as to cause the cooking of the second food product; in particular, the first food product is heated until it reaches its boiling temperature.

In accordance with a non-limiting embodiment, the step of coupling the containers comprises the sub-step of coupling them in a firm manner.

In particular, the step of coupling the containers is subsequent to the step of removing (at least partially) the closing elements.

Advantageously but not necessarily, the use comprises a mixing step (in particular, subsequent to the step of joining the first product to the second product), during which the coupled containers (i.e. the package in its operating condition) are shaken so as to mix the first and second food products. In particular, the mixing step follows the step of coupling the containers and takes place (at least partially) before the heating step of the chamber.

According to a non-limiting embodiment, the use comprises the step of extending, by a predetermined amount of time, the heating step of said chamber so as to keep the boiling temperature for a predetermined amount of time. Advantageously but not necessarily, the heating step is carried out at a temperature value between about 80 °C and about 130 °C for an amount of time of not less than about 2 minutes, more precisely between about 2 minutes and about 8 minutes.

In accordance with non-limiting embodiments, the use also comprises a step of bringing the containers into a position on top of one another before the step of removing the closing elements. In particular, there is also a step of wrapping the containers with a band during said transport step, to reciprocally hold them in position.

According to a further implementation, the use also comprises the following steps:
- uncoupling the containers at the end of their heating;
- at least partially inserting a bottom of the second container into the first container, in particular so that a user can pick up the second container through the first container.

### BRIEF DESCRIPTION OF THE FIGURES

The invention is described below with reference to the accompanying drawings which illustrate non-limiting examples of embodiments thereof, wherein:
- Figure 1 is a perspective view of a package in the preservation condition;
- Figure 2 is a perspective view of the package of Figure 1 in the operating condition;
- Figures 3 and 4 show frontal views of the package in further operating configurations;
- Figure 5 schematically illustrates a cross-section of a detail of the package of Figure 1; and
- Figure 6 schematically illustrates a cross-section of a detail of the package of Figure 2.

### DETAILED DESCRIPTION

Throughout this description, the expressions "embodiment", "implementation", and "advantageously" or the like mean that a certain peculiarity, structure or characteristic is included in at least one embodiment of the invention set forth in the present description, but it is not excluded that the same peculiarity, structure and/or characteristic is common to all embodiments of the invention or that the same peculiarity, structure or characteristic is absent in one or more embodiments of the invention.

It should also be noted that terms such as "less/lower", "lateral/side", "rear", "upper/greater", "front" and the like are reference terms that should not be construed as restrictive terms.

Referring to the attached Figures, a food package is indicated as a whole by the number 100.

In accordance with an embodiment of the invention, both containers 101, 102 are made of a material suitable for microwave cooking. More precisely, this material comprises (is) a polymeric material (e.g. selected from PP and/or PET) .

The package 100 comprises a first container 101 and a second container 102, each of which has a respective opening 101a, 102a to access an inner volume 101b, 102b suitable to house a food product. More precisely, the first container 101 contains a first food product 1 and the second container 102 contains a second food product 2.

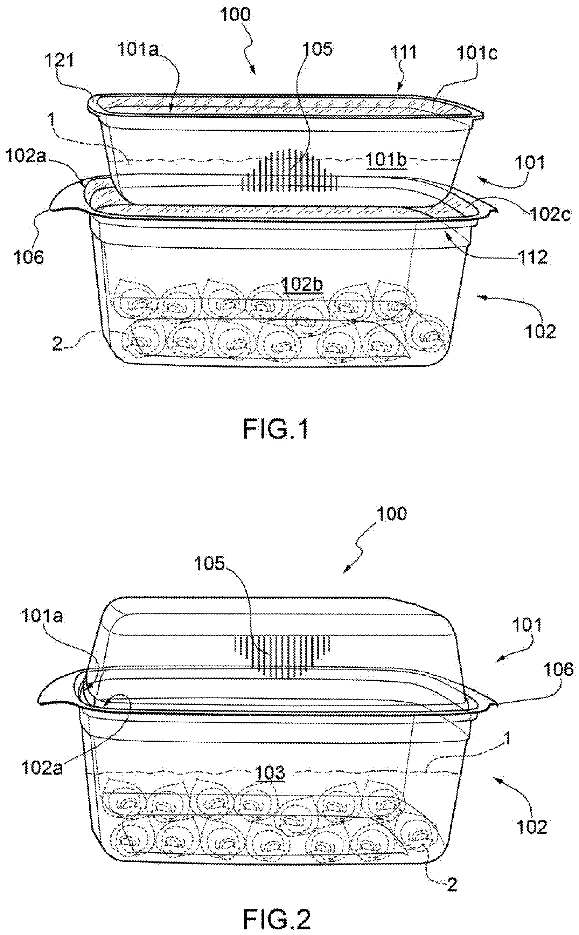

With reference to Figure 1, the opening 101a, 102a of each container 101, 102 is closed (in particular, in a sealed manner) by a respective closing element 101c, 102c, for example a cover, a film, a layer, a lid or similar. In particular, if films or lids are used, they are advantageously heat-welded to their respective container. Thus, the closing elements 101c, 102c are advantageously independent of each other and can be removed individually, so that the end user can access the contents of one or both containers 101, 102, for example to taste the food products before preparation or to combine their contents.

In more detail, the package 100 is therefore able to assume a preservation condition, in which the containers 101, 102 are separated and closed by their respective closing elements 101c, 102c, in such a way that the food products contained therein are preserved from the external environment and are kept divided. In particular, in the preservation condition, the containers 101, 102 are placed on top of one another (Figure 1) and are preferably wrapped in a band (known per se and not illustrated) that reciprocally holds them in position. This band is, for example, made of cardboard.

With particular reference to Figures 1, 2, 5 and 6, the package 100 can also have an operating condition in which the user first opens the containers 101, 102 by disconnecting the respective closing elements 101c, 102c and then couples the containers at their respective access openings 101a, 102a.

In particular, both containers 101, 102 comprise respective edges 111, 112 arranged around their respective access openings 101a, 102a. In greater detail, the edges 111, 112 are shaped to engage with each other in such a way that the access openings of the containers face each other, so that, for example, the first container 101 is coupled in an upside-down position with the second container 102. In this way, the package 100 has an operating configuration in which a chamber 103, also called "cooking chamber", is defined whose containing volume is formed by the joining of the inner volumes 101b, 102b of the individual containers 101, 102.

The food products 1 and 2, previously housed in their respective containers 101, 102, are thus joined together and enclosed in the cooking chamber 103. Subsequently, the user can easily subject the configured package 100 to a heating step, i.e. with the cooking chamber 103 already created, for example by placing the package in a microwave oven.

In this regard and according to one aspect of the invention, the first container 101 contains a first food product 1 with at least one liquid component (for example the first food product 1 is selected from a sauce, a seasoning, a broth and the like), while the second container 102 contains a second food product 2 with at least one solid component, (for example the second food product 2 is selected from pasta, stuffed pasta, rice, meat and the like). In particular, the first food 1 comprises water.

When the containers are coupled together to make the above-mentioned cooking chamber 103, the food products 1 and 2, initially separated in their respective containers 101, 102, are joined and enclosed within the cooking chamber (in particular, in contact with one another) and can thus be subjected to a common heating step whereby the liquid component of the first food product 1 causes the cooking of the second food product 2. In other words, the liquid component of the first food product acts as a cooking liquid. For example, if the first food product 1 is a sauce and the second food product 2 is pasta, the liquid component of the sauce mixed with the pasta determines its cooking, similarly to what happens when the pasta is in a traditional pot containing cooking water. In an advantageous way compared to the traditional preparation with cooking water, the cooking carried out in the package according to the invention provides the final dish with particular organoleptic characteristics, since the pasta is cooked directly in the sauce.

This means that the package makes it possible to preserve the food products 1, 2 separately (the so-called "preservation condition" of the package 100) and to prepare and heat them already joined together (the so-called "operating condition" of the package 100).

Another important advantage is that the package 100 in the operating condition, i.e. having the containers 101, 102 coupled with one another at the edges 111, 112, prevents product outflows during the preparation and cooking steps.

In accordance with the claimed invention, the containers 101, 102 are firmly coupled with one another. Advantageously, the firm coupling of the containers 101, 102 at their respective access openings 101a, 102a ensures that the overpressure (with respect to the outer pressure) that develops inside the cooking chamber 103 as a result of the evaporation of a liquid component of the food products, for example sauce, after heating does not cause the separation of the containers, thus causing the outflow of food products. Therefore, the package 100 allows the user to cook the food products without the risk of getting dirty or soiling the surrounding environment, for example the inner space of a microwave oven.

Referring in particular to Figures 1 and 2, the edge 111 of the first container 101 is advantageously counter-shaped with respect to the edge 112 of the second container 102. In particular, each edge 111, 112 delimits the access opening 101a, 102a of the respective container 101, 102, i.e. each edge is close to a margin of the respective access opening.

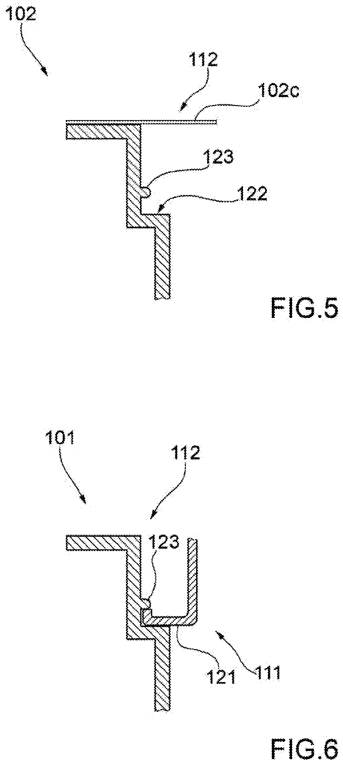

In accordance with the embodiment of the invention illustrated in Figures 2 and 6, the edge 111 has a collar 121 which (projects laterally outwards from the access opening 101a of the first container 101 and) is designed to rest against (on) a support surface 122 of the edge 112. In particular, the support surface 122 extends from (at least) one side wall (more precisely, from the side walls) of the second container 102, more particularly towards the inside of the container 102 itself. More specifically, the support surface 122 extends from the edge 112.

Advantageously but not necessarily (see in particular Figures 5 and 6), at least one projecting element, for example an indentation 123 (in particular, a plurality of projecting elements, for example indentations 123) is arranged at the edge 112 of the second container 102. In particular, when the package 100 is in the operating condition, the first container 101 is in an upside-down position with the collar 121 substantially "snap-fitted" between the indentations 123 and the support surface, so that the containers 101, 102 remain firmly coupled during the subsequent step of preparation and heating of the final dish.

In particular, the indentation 123 is arranged in such a way as to define with the support surface 122 a cavity configured to house at least one portion of the collar 121. More precisely, the indentation 123 is placed above the support surface 122.

In accordance with other embodiments, alternatively or in combination with one or more indentations, one or more undercuts may be provided, preferably made at the edge 112 of the second container 102 and shaped to receive portions of the edge 111 of the first container 101.

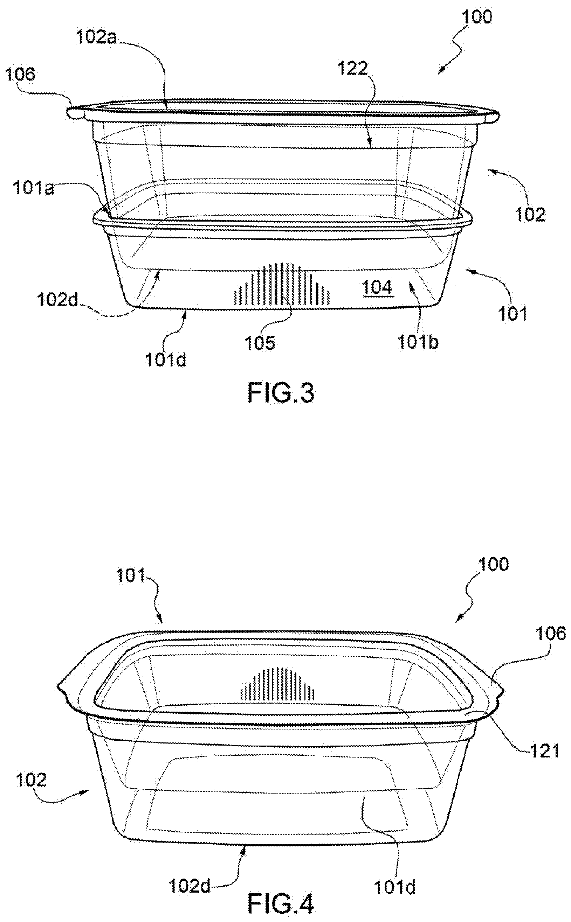

With reference to Figure 3, the access opening 101a of the first container 101 is configured to receive a bottom 102d of the second container 102 to allow the latter to be housed (at least partially) in the inner volume of the first container 101. In this way, at the end of the preparation step, a user can grasp and handle the second container 102 through the first container 101. In fact, at the end of the heating/cooking step, the containers 101 and 102 are separated and the one containing the final dish tends to be much warmer than the other one. The possibility of inserting the bottom 102d of the second container 102 into the first container 101 allows the user to handle the second container 102 without the risk of burning himself and therefore allows an "on-the-go" consumption of the food directly in the container.

With reference to Figure 3, the bottom 102d of the second container 102 is shaped (and the container 101 is shaped) in such a way as to abut at a predetermined distance from a bottom 101d of the first container 101, so as to define a hollow space 104 between the two containers 101, 102. In particular, the body of the first container 101 to which abuts the bottom 102d of the second container 102 is tapered, so as to maintain said distance through a form interference between the two containers 101 and 102.

With reference to the Figures, the container 101 comprises a pair of knurled portions 105 to allow a user's grip. Advantageously, the knurled portion allows an appropriate friction and also prevents the user to burn himself when handling the containers after the food heating/cooking step. In accordance with a general concept of the invention, the second container can also be provided with one or more knurled portions.

As better shown in Figure 2, advantageously but not necessarily, the second container 102 comprises a pair of gripping members, preferably a pair of opposite handles 106. In particular, the handles 106 are shaped as fins developing from the side walls of the container.

With reference to Figure 4, according to some embodiments, a bottom 101d of the first container 101 can be housed in the access opening 102a of the second container 102, to close it, and a closing element 101c, for example a cover, a film or the like, is connected to the first container 101 to close (in particular, in a sealed manner) its access opening 101a. Unlike the configuration previously described and illustrated in Figure 1, there is therefore no second closing element 102c connected to the second container 102. Also in this case, however, the containers can be configured between a preservation condition, in which the bottom 101d of the first container 101 is housed in the access opening 102a of the second container 102 (so as to close, in particular seal, the access opening 102a itself), and an operating condition in which the closing element 101c is disconnected from the first container 101 and in which the containers are coupled at the respective access openings 101a, 102a to create the aforementioned cooking chamber 103, according to the methods described above and as shown in Figure 2.

Also in this case, it is preferable that the containers 101, 102 are firmly coupled with one another when the package is in the operating condition.

With particular reference to Figure 4 (in the preservation condition), according to some embodiments, the first container 101 is completely housed in the second container 102 and the depth of the first container 101 is lower than the depth of the second container 102 so that, between the bottom 101d of the first container 101 and the bottom 102d of the second container 102 a containing volume is defined to receive a food product (typically the second food product 2).

More precisely but not necessarily, the first container 101 is counter-shaped with respect to the access opening 102a of the second container 102 and is preferably welded to a support surface 122 (in particular, as defined above) arranged adjacent to the access opening 102a of the second container 102.

With reference to the description already provided in relation to the package 100 according to the invention, a use of the package 100 to prepare food products to be consumed will now be described.

The use comprises the following steps:
- (at least partially) removing the closing elements 101c and 102c from the respective containers 101 and 102 (i.e., removing the container 101 from the container 102 and removing the closing element 101c from the container 101);
- joining the first food product 1 to the second food product 2 inside the second container 102 (and/or the first container 101), as shown in Figure 2;
- coupling the containers 101 and 102 at their respective access openings 101a and 102a to create a chamber 103 (also called "cooking chamber") with a containing volume defined by the joining of the inner volumes of the containers 101 and 102 (as shown in Figure 2, the food products 1 and 2 remain joined and enclosed within the chamber 3);
- heating the chamber 3 by means of a heat source (in particular a microwave source) (in particular until the liquid component of the first food product 1 reaches its boiling temperature) so as to cause the cooking of the second food product 2.

In particular, the step of coupling the containers 101 and 102 is subsequent to the step of removing (at least partially) the closing elements 101c and 102c.

Advantageously but not necessarily, the use comprises a mixing step (in particular, subsequent to the step of joining the first product 1 to the second product 2), during which the containers 101 and 102 coupled to one another (i.e. the package 100 in its operating condition) are shaken so as to mix together the first and second food products 1 and 2. In particular, the mixing step follows the step of coupling the containers 101 and 102 and takes place (at least partially) before the heating step of the chamber.

For example, if the first food product 1 is a sauce and the second food product 2 is pasta, the liquid component of the sauce mixed with the pasta determines its cooking, similarly to what happens when the pasta is in a traditional pot containing cooking water. In an advantageous way, therefore, the use allows both to preserve food products 1, 2 separately and to prepare a final dish.

In accordance with one embodiment, it is provided to extend the heating step of the chamber 103 by a predetermined amount of time in order to maintain the boiling temperature for a predetermined amount of time. In this respect, the heating step is carried out at a temperature value between about 80 °C and about 130 °C for an amount of time of not less than about 2 minutes, more precisely between about 2 minutes and about 8 minutes.

According to an embodiment, the step of coupling the containers comprises the sub-step of coupling them in a firm manner.

In accordance with a further embodiment and as shown in Figure 1, a transport step of the containers 101, 102 is provided for bringing them into a position on top of one another, before the step of removing the closing elements. Preferably, there is also a step of wrapping the containers 101, 102 with a band during the transport step, to reciprocally hold them in position.

In accordance with a further embodiment, the use also comprises the following steps:
- uncoupling the containers 101, 102 at the end of their heating;
- at least partially inserting a bottom 102d of the second container 102 into the first container 101 (Figure 3), so that a user can pick up the second container 102 through the first container 101.

It has been experimentally found that the invention achieves its intended aims. In particular, a package in accordance with the invention allows an easy preparation of a dish and a convenient "on-the-go" consumption, i.e. even under take-away conditions, directly inside the package itself. In fact, the possibility of handling the container of the ready-to-eat (hot) food through the other container allows the consumer to avoid burning and simplifies the consumption when moving from one place to another.

In addition, the firm coupling of the containers to define a cooking chamber prevents the risk that the consumer may dirty himself or the surrounding environment during the preparation and thus simplifies the meal preparation even for consumers with little culinary experience and/or hasty. This coupling also allows for faster and more efficient cooking.

## Claims

1. A package (100) for food products (1, 2) comprising:
- a first container (101) having an access opening (101a) and an inner volume (101b) and containing a first food product (1);
- a first closing element (101c) connected to the first container (101) so as to close the access opening (101a) thereof;
- a second container (102) having an access opening (102a) and an inner volume (102b) and containing a second food product (2);
- a second closing element (102c) connected to the second container (102) so as to close the access opening (102a) thereof, wherein said first and second containers (101, 102) can be configured between a preservation condition, in which they are separate and closed by the respective closing elements (101c, 102c), and an operating condition, in which the first and the second closing elements (101c, 102c) are at least partially disconnected from the respective first and second containers (101, 102), which are coupled to one another at the respective access openings (101a, 102a) so as to create a chamber (103) having a containing volume defined by the joining of the inner volumes (101b, 102b) of the first and the second containers (101, 102); said chamber (103) being capable of being subjected to a heating step;
the package (100) being **characterised in that** the first and the second containers (101, 102) are configured to be firmly coupled, when they are in the operating condition.

2. The package (100) according to claim 1, wherein the first and the second containers (101, 102) comprise respective edges (111, 112) arranged around the respective access openings (101a, 102a), said edges (111, 112) being configured to engage with one another, so that the access openings (101a, 102a) of the first and of the second containers (101, 102) face one another, in particular in such a way that the first container (101) is coupled in an upside-down position with the second container (102), or vice versa.

3. The package (100) according to claim 2, wherein the edge (111) of the first container (101) is counter-shaped with respect to the edge of the second container (102).

4. The package (100) according to claim 2 or 3 and comprising at least one undercut made at the edge (111, 112) of the first or of the second container (101, 102); said undercut being designed to receive a portion of the edge (112, 111) of the second or of the first container (102, 101), respectively, so that said first and second containers (101, 102) are firmly coupled with one another.

5. The package (100) according to any one of the claims from 3 to 4 and comprising:
- a collar (121) associated with (in particular, of) the edge (111) of the first container (101) and designed to rest on a support surface (122) associated with (in particular, of) the edge (112) of the second container (102);
- at least one projecting element (123) arranged at the edge (112) of the second container (102); said projecting element (123) cooperating with the collar (121) in order to hold, respectively, a portion of the collar (121), so that said first and second containers (101, 102) are firmly coupled with one another.

6. The package (100) according to any one of the claims from 2 to 5, wherein each edge (111, 112) delimits the access opening (101a, 102a) of a respective container (101, 102).

7. The package (100) according to any one of the preceding claims, wherein the first container (101), in particular the access opening (101a) of the first container (101), and the second container (102) are configured so that a bottom (102d) of the second container (102) can be at least partially housed in the inner volume (101b) of the first container (101), in particular in such a way that a user can pick up the second container (102) through the first container (101), or vice versa.

8. The package (100) according to claim 7, wherein the first and the second container (101, 102) are shaped so that, once the second container (102) is partially inserted in the first container (101), the bottom (102d) of the second container is placed at a predetermined distance from a bottom (101d) of the first container (101) so as to define a hollow space between the first and the second container (101, 102).

9. The package (100) according to any one of the preceding claims, wherein one or both of the first and the second containers (101, 102) comprise at least one knurled portion (105) to facilitate user's grip.

10. The package (100) according to any one of the preceding claims, wherein at least the first or at least the second container (101, 102) comprises at least one gripping member (106), in particular which extends from a respective edge (111, 112).

11. The package (100) according to any one of the preceding claims, wherein the first and the second containers (101, 102) are made of a material suitable for microwave cooking.

12. The package (100) according to any one of the preceding claims, wherein:
- the first food product (1) comprises at least one liquid component, in particular containing water;
- the second food product (2) comprises at least one solid component,
when the first and the second containers (101, 102) are in the operating condition and are coupled to create said chamber (103), the first and the second food products (1, 2) are enclosed in the same containing volume, in particular in contact, inside the chamber (3), in particular so that they can be subjected to a common heating step during which at least the liquid component of the first food product (1) causes the cooking of the second food product (2).

13. The package (100) according to any one of the preceding claims, wherein the first and the second containers (101, 102) are arranged on top of one another in the preservation condition.

14. The package (100) according to claim 13 and comprising a band (150) to wrap the containers (101, 102) and reciprocally hold them in position.

15. A use of a package according to any one of the preceding claims for the preparation of food products to be consumed; the use comprising the steps of:
- at least partially removing the first and the second closing elements (101c, 102c) respectively from the first and the second container (101, 102);
- joining the first food product (1) to the second food product (2) inside the first and/or the second container (101, 102);
- firmly coupling the first and the second containers (101, 102) at the respective access openings (101a, 102a) so as to create the chamber (103) having a containing volume defined by the joining of the inner volumes (101b, 102b) of the first and of the second containers (101, 102); said first and second food products (1, 2) remaining enclosed inside said containing volume;
- heating said chamber (3) through a heat source so as to cause the cooking of the second food product (2); in particular, the first food product is heated until it reaches its boiling temperature.

16. The use according to claim 15, wherein the step of coupling the first and the second containers (101, 102) comprises the sub-step of coupling them in a firm manner; in particular, the step of coupling the first and the second containers (101, 102) is subsequent to the step of at least partially removing the first and the second closing elements (101c, 102c).

17. The use according to claim 15 or 16 and comprising the step of extending, by a predetermined amount of time, the heating step of said chamber (3) so as to keep a given temperature (in particular, the boiling temperature) for a predetermined amount of time.

18. The use according to any one of the claims from 15 to 17, and comprising the step of transporting the first and the second containers (101, 102) on top of one another before the step of removing the closing elements (101c, 102c).

19. The use according to any one of the claims from 15 to 18, and further comprising the following steps:
- uncoupling the first and the second containers (101, 102) at the end of their heating;
- at least partially inserting a bottom (102d) of the second container (102) into the first container (101), in particular so that a user can pick up the second container (102) through the first container (101).

20. The use according to any one of the claims from 15 to 19 and comprising a mixing step, during which the first and the second containers (101, 102), coupled together, are shaken so as to mix the first and the second food products (1, 2) with one another; in particular, the mixing step is subsequent to the steps of joining the first product (1) to the second product (2) and of coupling the first and the second containers (101, 102) and takes place at least partially before the heating step of the chamber (3).

## Patentansprüche

1. Verpackung (100) für Nahrungsmittel (1, 2), umfassend:
- einen ersten Behälter (101), der eine Zugangsöffnung (101a) und ein Innenvolumen (101b) aufweist und ein erstes Nahrungsmittel (1) enthält;
- ein erstes Verschlusselement (101c), das derart mit dem ersten Behälter (101) verbunden ist, dass dessen Zugangsöffnung (101a) verschlossen ist;
- einen zweiten Behälter (102), der eine Zugangsöffnung (102a) und ein Innenvolumen (102b) aufweist und ein zweites Nahrungsmittel (2) enthält;
- ein zweites Verschlusselement (102c), das derart mit dem zweiten Behälter (102) verbunden ist, dass dessen Zugangsöffnung (102a) verschlossen ist, wobei der erste und der zweite Behälter (101, 102) zwischen einem Konservierungszustand, in dem sie getrennt und von den jeweiligen Verschlusselementen (101c, 102c) verschlossen sind, und einem Einsatzzustand ausgestaltet sein können, in dem das erste und das zweite Verschlusselement (101c, 102c) zumindest teilweise von dem ersten beziehungsweise dem zweiten Behälter (101, 102) getrennt sind, die derart an den jeweiligen Zugangsöffnungen (101a, 102a) aneinander gekoppelt sind, dass eine Kammer (103) geschaffen wird, die ein Fassungsvolumen aufweist, das von dem Verbinden der Innenvolumina (101b, 102b) des ersten und des zweiten Behälters (101; 102) definiert ist; wobei die Kammer (103) in der Lage ist, einem Erwärmungsschritt ausgesetzt zu werden;
wobei die Verpackung (100) **dadurch gekennzeichnet ist, dass** der erste und der zweite Behälter (101, 102) derart ausgestaltet sind, dass sie fest gekoppelt sind, wenn sie sich im Einsatzzustand befinden.

2. Verpackung (100) nach Anspruch 1, wobei der erste und der zweite Behälter (101, 102) jeweilige Ränder (111, 112) umfassen, die um die jeweiligen Zugangsöffnungen (101a, 102a) herum angeordnet sind, wobei die Ränder (111, 112) derart ausgestaltet sind, dass sie derart ineinandergreifen, dass die Zugangsöffnungen (101a, 102a) des ersten und des zweiten Behälters (101, 102) einander zugewandt sind, insbesondere derart, dass der erste Behälter (101) in einer auf dem Kopf stehenden Position mit dem zweiten Behälter (102) gekoppelt ist oder umgekehrt.

3. Verpackung (100) nach Anspruch 2, wobei der Rand (111) des ersten Behälters (101) in Bezug auf den Rand des zweiten Behälters (102) gegengeformt ist.

4. Verpackung (100) nach Anspruch 2 oder 3 und die mindestens einen Unterschnitt umfasst, der an dem Rand (111, 112) des ersten oder des zweiten Behälters (101, 102) hergestellt ist; wobei der Unterschnitt derart gestaltet ist, dass er einen Abschnitt des Randes (112, 111) des zweiten beziehungsweise des ersten Behälters (102, 101) aufnimmt, derart dass der erste und der zweite Behälter (101, 102) fest miteinander gekoppelt sind.

5. Verpackung (100) nach einem der Ansprüche 3 bis 4 und umfassend:
- einen Hals (121), der (insbesondere von) dem Rand (111) des ersten Behälters (101) zugehörig ist und derart gestaltet ist, dass er auf einer Stützoberfläche (122) ruht, die (insbesondere von) dem Rand (112) des zweiten Behälters (102) zugehörig ist;
- mindestens ein hervorstehendes Element (123), das an dem Rand (112) des zweiten Behälters (102) angeordnet ist; wobei das hervorstehende Element (123) derart mit dem Hals (121) zusammenwirkt, dass jeweils ein Abschnitt des Halses (121) derart gehalten wird, dass der erste und der zweite Behälter (101, 102) fest miteinander gekoppelt sind.

6. Verpackung (100) nach einem der Ansprüche 2 bis 5, wobei jeder Rand (11, 112) die Zugangsöffnung (101a, 102a) eines jeweiligen Behälters (101, 102) abgrenzt.

7. Verpackung (100) nach einem der vorhergehenden Ansprüche, wobei der erste Behälter (101), insbesondere die Zugangsöffnung (101a) des ersten Behälters (101), und der zweite Behälter (102) derart ausgestaltet sind, dass ein Boden (102d) des zweiten Behälters (102) zumindest teilweise in dem Innenvolumen (101b) des ersten Behälters (101) untergebracht werden kann, insbesondere derart dass ein Benutzer den zweiten Behälter (102) durch den ersten Behälter (101) aufnehmen kann oder umgekehrt.

8. Verpackung (100) nach Anspruch 7, wobei der erste und der zweite Behälter (101, 102) derart geformt sind, dass, nachdem der zweite Behälter (102) teilweise in den ersten Behälter (101) eingesetzt wurde, der Boden (102d) des zweiten Behälters in einem vorbestimmten Abstand von einem Boden (101d) des ersten Behälters (101) platziert ist, derart dass ein Hohlraum zwischen dem ersten und dem zweiten Behälter (101, 102) definiert wird.

9. Verpackung (100) nach einem der vorhergehenden Ansprüche, wobei einer oder beide von dem ersten und/oder dem zweiten Behälter (101, 102) mindestens einen gerändelten Abschnitt (105) umfasst bzw. umfassen, derart dass das Greifen durch den Benutzer erleichtert wird.

10. Verpackung (100) nach einem der vorhergehenden Ansprüche, wobei mindestens der erste und/oder mindestens der zweite Behälter (101, 102) mindestens ein Greifelement (106) umfasst bzw. umfassen, das sich insbesondere von einem jeweiligen Rand (111, 112) erstreckt.

11. Verpackung (100) nach einem der vorhergehenden Ansprüche, wobei der erste und der zweite Behälter (101, 102) aus einem Material bestehen, dass sich zum Mikrowellenkochen eignet.

12. Verpackung (100) nach einem der vorhergehenden Ansprüche, wobei:
- das erste Nahrungsmittel (1) mindestens eine flüssige Komponente umfasst, die insbesondere Wasser enthält;
- das zweite Nahrungsmittel (2) mindestens eine feste Komponente umfasst,
wenn der erste und der zweite Behälter (101, 102) sich im Einsatzzustand befinden und derart gekoppelt sind, dass sie die Kammer (103) schaffen, das erste und das zweite Nahrungsmittel (1, 2), insbesondere in Kontakt, in demselben Fassungsvolumen im Inneren der Kammer (3) umschlossen sind, insbesondere derart, dass sie einem gemeinsamen Erwärmungsschritt unterzogen werden können, während dem mindestens die flüssige Komponente des ersten Nahrungsmittels (1) das Kochen des zweiten Nahrungsmittels (2) bewirkt.

13. Verpackung (100) nach einem der vorhergehenden Ansprüche, wobei der erste und der zweite Behälter (101, 102) im Konservierungszustand aufeinander angeordnet sind.

14. Verpackung (100) nach Anspruch 13 und die ein Band (150) für das Umwickeln der Behälter (101, 102) und ihr gegenseitiges Halten in Position umfasst.

15. Verwendung einer Verpackung nach einem der vorhergehenden Ansprüche für die Zubereitung von zu verbrauchenden Nahrungsmitteln; wobei die Verwendung die folgenden Schritte umfasst:
- zumindest partielles Entfernen des ersten und des zweiten Verschlusselements (101c, 102c) von dem ersten beziehungsweise dem zweiten Behälter (101, 102);
- Verbinden des ersten Nahrungsmittels (1) mit dem zweiten Nahrungsmittel (2) im Inneren des ersten und/oder des zweiten Behälters (101, 102);
- festes Koppeln des ersten und des zweiten Behälters (101, 102) an den jeweiligen Zugangsöffnungen (101a, 102a), derart dass die Kammer (103) geschaffen wird, die ein Fassungsvolumen aufweist, das durch das Verbinden der Innenvolumina (101b, 102b) des ersten und des zweiten Behälters (101, 102) definiert wird; wobei das erste und das zweite Nahrungsmittel (1, 2) im Inneren des Fassungsvolumens umschlossen bleiben;
- Erwärmen der Kammer (3) durch eine Wärmequelle, derart dass das Kochen des zweiten Nahrungsmittels (2) bewirkt wird; wobei insbesondere das erste Nahrungsmittel erwärmt wird, bis es seine Siedetemperatur erreicht.

16. Verwendung nach Anspruch 15, wobei der Schritt des Koppelns des ersten und des zweiten Behälters (101, 102) den Unterschritt ihres Koppelns auf eine feste Weise umfasst; wobei insbesondere der Schritt des Koppelns des ersten und des zweiten Behälters (101, 102) auf den Schritt des zumindest partiellen Entfernens des ersten und des zweiten Verschlusselements (101c, 102c) folgt.

17. Verwendung nach Anspruch 15 oder 16 und die den Schritt des Ausdehnens des Schritts des Erwärmens der Kammer (3) um eine vorbestimmte Dauer umfasst, derart dass eine gegebene Temperatur (insbesondere die Siedetemperatur) während einer vorbestimmten Dauer gehalten wird.

18. Verwendung nach einem der Ansprüche 15 bis 17 und die den Schritt des Transportierens des ersten und des zweiten Behälters (101, 102) aufeinander vor dem Schritt des Entfernens der Verschlusselemente (101c, 102c) umfasst.

19. Verwendung nach einem der Ansprüche 15 bis 18 und die ferner die folgenden Schritte umfasst:
- Entkoppeln des ersten und des zweiten Behälters (101, 102) am Ende ihres Erwärmens;
- zumindest partielles Einsetzen eines Bodens (102d) des zweiten Behälters (102) in den ersten Behälter (101), insbesondere derart, dass ein Benutzer den zweiten Behälter (102) durch den ersten Behälter (101) aufnehmen kann.

20. Verwendung nach einem der Ansprüche 15 bis 19 und die einen Mischschritt umfasst, während dem der erste und der zweite Behälter (101, 102), die miteinander gekoppelt sind, derart geschüttelt werden, dass das erste und das zweite Nahrungsmittel (1, 2) miteinander vermischt werden; wobei insbesondere der Mischschritt auf die Schritte des Verbindens des ersten Nahrungsmittels (1) mit dem zweiten Nahrungsmittel (2) und des Koppelns des ersten und des zweiten Behälters (101, 102) folgt und zumindest teilweise vor dem Schritt des Erwärmens der Kammer (3) erfolgt.

## Revendications

1. Emballage (100) pour produits alimentaires (1, 2) comprenant :
- un premier récipient (101) ayant une ouverture d'accès (101a) et un volume intérieur (101b) et contenant un premier produit alimentaire (1) ;
- un premier élément de fermeture (101c) relié au premier récipient (101) de manière à fermer son ouverture d'accès (101a) ;
- un deuxième récipient (102) ayant une ouverture d'accès (102a) et un volume intérieur (102b) et contenant un deuxième produit alimentaire (2) ;
- un second élément de fermeture (102c) relié au second récipient (102) de manière à fermer son ouverture d'accès (102a), dans lequel lesdits premier et second récipients (101, 102) peuvent être configurés entre un état de conservation, dans lequel ils sont séparés et fermés par les éléments de fermeture respectifs (101c, 102c), et un état de fonctionnement, dans lequel les premier et second éléments de fermeture (101c, 102c) sont au moins partiellement déconnectés des premier et second récipients respectifs (101, 102), qui sont couplés l'un à l'autre au niveau des ouvertures d'accès respectives (101a, 102a) de manière à créer une chambre (103) ayant un volume de confinement défini par la réunion des volumes internes (101b, 102b) des premier et second récipients (101, 102) ; ladite chambre (103) pouvant être soumise à une étape de chauffage ;
l'emballage (100) étant **caractérisé en ce que** les premier et second récipients (101, 102) sont configurés pour être fermement couplés, lorsqu'ils sont dans l'état de fonctionnement.

2. Emballage (100) selon la revendication 1, dans lequel les premier et second récipients (101, 102) comprennent des bords respectifs (111, 112) agencés autour des ouvertures d'accès respectives (101a, 102a), lesdits bords (111, 112) étant configurés pour s'engager l'un avec l'autre, de sorte que les ouvertures d'accès (101a, 102a) des premier et second récipients (101, 102) se font face, en particulier de telle manière que le premier récipient (101) est couplé dans une position inversée avec le second récipient (102), ou vice versa.

3. Emballage (100) selon la revendication 2, dans lequel le bord (111) du premier récipient (101) est de forme contraire par rapport au bord du deuxième récipient (102).

4. Emballage (100) selon la revendication 2 ou 3 et comprenant au moins une contre-dépouille réalisée au niveau du bord (111, 112) du premier ou du second récipient (101, 102) ; ladite contre-dépouille étant conçue pour recevoir une partie du bord (112, 111) du second ou du premier récipient (102, 101), respectivement, de sorte que lesdits premier et second récipients (101, 102) sont fermement couplés l'un à l'autre.

5. Emballage (100) selon l'une quelconque des revendications 3 à 4 et comprenant :
- une collerette (121) associée à (notamment, de) la bordure (111) du premier récipient (101) et destinée à reposer sur une surface d'appui (122) associée à (notamment, de) la bordure (112) du deuxième récipient (102) ;
- au moins un élément en saillie (123) disposé au niveau du bord (112) du second récipient (102) ; ledit élément en saillie (123) coopérant avec la collerette (121) afin de maintenir, respectivement, une partie de la collerette (121), de sorte que lesdits premier et second récipients (101, 102) sont fermement couplés l'un à l'autre.

6. Emballage (100) selon l'une quelconque des revendications de 2 à 5, dans lequel chaque bord (111, 112) délimite l'ouverture d'accès (101a, 102a) d'un récipient respectif (101, 102).

7. Emballage (100) selon l'une quelconque des revendications précédentes, dans lequel le premier récipient (101), notamment l'ouverture d'accès (101a) du premier récipient (101), et le deuxième récipient (102) sont configurés pour qu'un fond (102d) du deuxième récipient (102) puisse être au moins partiellement logé dans le volume intérieur (101b) du premier récipient (101), notamment de manière à ce qu'un utilisateur puisse prendre le deuxième récipient (102) à travers le premier récipient (101), ou inversement.

8. Emballage (100) selon la revendication 7, dans lequel le premier et le deuxième récipients (101, 102) sont formés de sorte que, une fois que le deuxième récipient (102) est partiellement inséré dans le premier récipient (101), le fond (102d) du deuxième conteneur est placé à une distance prédéterminée d'un fond (101d) du premier récipient (101) de manière à définir un espace creux entre le premier et le deuxième récipient (101, 102).

9. Emballage (100) selon l'une quelconque des revendications précédentes, dans lequel l'un ou les deux du premier et du second récipients (101, 102) comprennent au moins une partie moletée (105) pour faciliter la prise en main par l'utilisateur.

10. Emballage (100) selon l'une quelconque des revendications précédentes, dans lequel au moins le premier ou au moins le deuxième récipient (101, 102) comprend au moins un élément de préhension (106), notamment qui s'étend depuis un bord respectif (111, 112).

11. Emballage (100) selon l'une quelconque des revendications précédentes, dans lequel le premier et le deuxième récipients (101, 102) sont réalisés dans un matériau adapté à la cuisson par micro-ondes.

12. Emballage (100) selon l'une quelconque des revendications précédentes, dans lequel :
- le premier produit alimentaire (1) comprend au moins un composant liquide, contenant notamment de l'eau ;
- le deuxième produit alimentaire (2) comprend au moins un composant solide,
lorsque le premier et le second récipients (101 , 102) sont en état de fonctionnement et sont couplés pour créer ladite chambre (103), le premier et le second produits alimentaires (1 , 2) sont enfermés dans un même volume de confinement, notamment en contact, à l'intérieur de la chambre (3), notamment pour être soumis à une étape commune de chauffage au cours de laquelle au moins le composant liquide du premier produit alimentaire (1) provoque la cuisson du second produit alimentaire (2).

13. Emballage (100) selon l'une quelconque des revendications précédentes, dans lequel le premier et le deuxième récipients (101, 102) sont disposés l'un sur l'autre à l'état de conservation.

14. Emballage (100) selon la revendication 13 et comprenant une bande (150) pour envelopper les récipients (101, 102) et les maintenir réciproquement en position.

15. Utilisation d'un emballage selon l'une quelconque des revendications précédentes pour la préparation de produits alimentaires à consommer ; l'utilisation comprenant les étapes :
- retirer au moins partiellement le premier et le deuxième élément de fermeture (101c, 102c) respectivement du premier et du deuxième récipient (101, 102) ;
- joindre le premier produit alimentaire (1) au second produit alimentaire (2) à l'intérieur du premier et/ou du second récipient (101, 102) ;
- coupler fermement les premier et second récipients (101, 102) au niveau des ouvertures d'accès respectives (101a, 102a) de manière à créer la chambre (103) ayant un volume de confinement défini par la réunion des volumes internes (101b, 102b) des premier et second récipients (101, 102) ; lesdits premier et second produits alimentaires (1, 2) restant enfermés à l'intérieur dudit volume de confinement ;
- chauffer ladite chambre (3) par l'intermédiaire d'une source de chaleur de façon à provoquer la cuisson du second produit alimentaire (2) ; en particulier, le premier produit alimentaire est chauffé jusqu'à ce qu'il atteigne sa température d'ébullition.

16. Utilisation selon la revendication 15, dans laquelle l'étape de couplage des premier et second récipients (101, 102) comprend la sous-étape consistant à les coupler de manière ferme ; en particulier, l'étape de couplage des premier et second récipients (101, 102) est consécutive à l'étape consistant à retirer au moins partiellement les premier et second éléments de fermeture (101c, 102c).

17. Utilisation selon la revendication 15 ou 16 et comprenant l'étape consistant à prolonger, d'une quantité de temps prédéterminée, l'étape de chauffage de ladite chambre (3) de manière à maintenir une température donnée (en particulier, la température d'ébullition) pendant une quantité de temps prédéterminée.

18. Utilisation selon l'une quelconque des revendications 15 à 17, et comprenant l'étape consistant à transporter le premier et le second récipients (101, 102) l'un sur l'autre avant l'étape consistant à retirer les éléments de fermeture (101c, 102c).

19. Utilisation selon l'une quelconque des revendications de 15 à 18, et comprenant en outre les étapes suivantes :
- désolidariser le premier et le deuxième récipients (101, 102) à la fin de leur chauffage ;
- insérer au moins partiellement un fond (102d) du deuxième récipient (102) dans le premier récipient (101), notamment pour qu'un utilisateur puisse prendre le deuxième récipient (102) à travers le premier récipient (101).

20. Utilisation selon l'une quelconque des revendications 15 à 19 et comprenant une étape de mélange, au cours de laquelle le premier et le second récipients (101, 102), couplés l'un à l'autre, sont agités de manière à mélanger le premier et le second produits alimentaires (1, 2) l'un avec l'autre ; en particulier, l'étape de mélange est postérieure aux étapes de liaison du premier produit (1) au second produit (2) et de couplage du premier et du second récipients (101, 102) et a lieu au moins partiellement avant l'étape de chauffage de la chambre (3).
